Europäisches Patentamt

European Patent Office

Office européen des brevets

(11) Publication number: **0 298 735**
**A2**

(12) # EUROPEAN PATENT APPLICATION

(21) Application number: **88306196.2**

(22) Date of filing: **07.07.88**

(51) Int. Cl.4: **B01D 29/38**

(30) Priority: **07.07.87 ZA 874923**

(43) Date of publication of application:
**11.01.89 Bulletin 89/02**

(84) Designated Contracting States:
**BE CH DE ES FR GB IT LI NL**

(71) Applicant: **Walker, Peter Norwood**
**15 Potgieter Street**
**Delmas Transvaal(ZA)**

Applicant: **Richter, Kalman**
**3 Leitch Road Greenside**
**Johannesburg Transvaal(ZA)**

(72) Inventor: **Walker, Peter Norwood**
**15 Potgieter Street**
**Delmas Transvaal(ZA)**

(74) Representative: **Leale, Robin George et al**
**FRANK B. DEHN & CO. Imperial House 15-19**
**Kingsway**
**London WC2B 6UZ(GB)**

(54) **Filter.**

(57) A filter in which liquid flows through at least one filter element (14), the or each filter element (14) has a pair of valves (20,21) for closing off the ends of the or each filter element (14) in turn for filtering and backwashing. The valves (20,21) are mounted on a common stem (19) operated by an actuator (22). With the actuator (20) on, the backwashing valve (21) is closed and the other valve (20) is open. With the actuator (22) off, the latter valve (20) closes and the backwashing valve (21) is open.

Fig. 1

EP 0 298 735 A2

## FILTER

THIS invention relates to a filter of the kind comprising a filter chamber into which liquid can flow through a plurality of filter elements and from which liquid can flow continuously. Each filter element is tubular, the first end of the tube being at the filter inlet and the second end being a cleaning valve. At the first or inlet end there is also a valve which is closed for backwashing. The two valves operate together so that when the inlet valve is open, the cleaning valve is closed and vice versa.

In prior art filters of the kind described the two valves are mounted on a common stem and stem is moved to and fro by means of an actuator such as a double acting hydraulic cylinder. If on opening of the cleaning valve, there is an obstruction such as a plant stem at the inlet and the inlet valve cannot seal fully, the valve system may be distorted and damaged.

According to the invention a filter comprises a housing composed of an inlet compartment; a filter chamber; a cleaning compartment; at least one tubular filter element extending from the inlet compartment to the cleaning compartment through the filter chamber; for the or each filter element a seat at its inlet and at the cleaning compartment; a pair of valve members movable in the inlet and cleaning compartments respectively, attached to a common stem and arranged to seat on the filter element seats in turn; and in line with the or each stem at the cleaning compartment an actuator with an actuator rod in line with the stem so that on operation of the actuator the stem is pressed by the rod to close the cleaning valve and open the inlet valve, the valve movement being reversed on deactivation of the actuator by pressure of liquid in the inlet compartment.

The actuator could be a diaphragm valve, a hydraulic cylinder, an electromagnetic actuator or a pneumatic actuator. The hydraulic or pneumatic actuators could have pistons or diaphragms.

An embodiment of the invention will now be described, by way of example only, with reference to the accompanying drawings, in which:

**Figure 1** is a section through a filter according to the invention and

**Figure 2** is an end view of Figure 1.

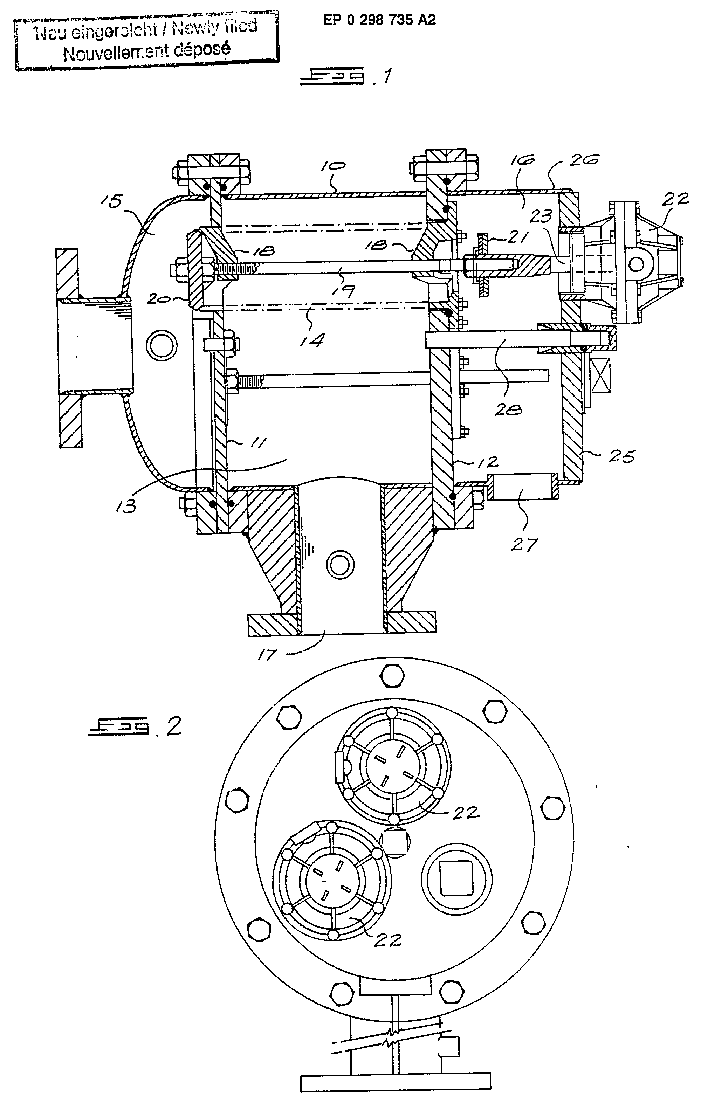

In the illustrated embodiment a filter chamber 13 is bounded by an outer wall 10 and end plates 11 and 12. Filter elements 14 extend between the end plates and there are two of them in this case.

Adjacent the end plate 11 there is an inlet compartment 15 and adjacent the end plate 12 a cleaning compartment 16. An outlet 17 leads from the chamber 13.

At the end of each filter element 14 there is a spider 18 for guiding a stem 19, which carries an inlet valve 20 and a cleaning valve 21. In line with the stem 19 is a hydraulic actuator 22 with an actuator rod 23 aligned with the stem 19. As illustrated the valve 20 is closed and the valve 21 is open. During normal operation the reverse is the case since the actuator 22 is activated from the rod 23 to press the stem 19 to the left.

During such normal operation liquid to be filtered enters the compartment 15, passes into the filter elements 14 and through them into the chamber 13 and to the outlet 17. When necessary, the actuator 22 is deactivated and the valve stem 19 moves to the right. In this case liquid flows from the chamber 13 into the element 14 and out through the cleaning compartment 16 to effect backwashing of the element in question.

The housing of the compartment 16 is formed by a support plate 25 for the actuators 22 and a wall 26 pierced by an outlet 27. For easy positioning the cover of the compartment 16 a peg 28 projects from the plate 12. Once the plate 25 is on the peg 28 it is easy to get the bolt holes for the cover in register. Note also that there are nine bolt holes. This allows the outlet 27 to be in any one of three positions.

In another another embodiment there are four filter elements and sixteen bolt holes thus providing for four possible backwash outlet positions.

It is to be clearly understood that there are no particular features of the foregoing specification, or of any claims appended hereto, which are at present regarded as being essential to the performance of the present invention, and that any one or more of such features or combinations thereof may therefore by included in, added to, omitted from or deleted from any of such claims if and when amended during the prosecution of this application or in the filing or prosecution of any divisional application based thereon. Furthermore the manner in which any of such features of the specification or claims are described or defined may be amended, broadened or otherwise modified in any manner which falls within the knowledge of a person skilled in the relevant art, for example so as to encompass, either implicitly or explicitly, equivalents or generalisations thereof.

## Claims

1. A filter comprising a housing composed of an inlet compartment; a filter chamber; a cleaning compartment; at least one tubular filter element extending from the inlet compartment to the cleaning compartment through the filter chamber; for the or each filter element a seat at its inlet and at the cleaning compartment; a pair of valve members movable in the inlet and cleaning compartments respectively, attached to a common stem and arranged to seat on the filter element seats in turn; and in line with the or each stem at the cleaning compartment an actuator with an actuator rod in line with the stem so that on operation of the actuator the stem is pressed by the rod to close the cleaning valve and open the inlet valve, the valve movement being reversed on deactivation of the actuator by pressure of liquid in the inlet compartment.

2. The filter claimed in claim 1 in which the cleaning compartment has a wall formed by a support plate, the filter compartment has an end plate and a locating peg projects from the end plate over which peg an aperture in the support plate fits to allow the support plate to be rotated in position.

Fig.1

Fig.2